# FASCICULE DE BREVET EUROPEEN

(11) **EP 1 045 588 B1**
(45) Date de publication et mention de la délivrance du brevet: **31.01.2007**
(21) Numéro de dépôt: 00400632.6
(22) Date de dépôt: 08.03.2000
(51) Int. Cl.: H04N 7/18

(54) **Dispostif d'émission d'images vidéo numériques**
Vorrichtung zur Übertragung von digitalen Videobildern
Transmission device for digital video images

(30) Priorité: 16.04.1999 FR 9904776
(43) Date de publication de la demande: 18.10.2000
(73) Titulaire: AIRBUS France, 31060 Toulouse (FR)
(72) Inventeur: Gobbo, Gilles, 31140 Aucamville (FR)
(74) Mandataire: Bonnetat, Christian

(56) Documents cités:
- WO-A-98/30978
- US-A- 4 483 599
- US-A- 4 816 828
- PATENT ABSTRACTS OF JAPAN vol. 018, no. 083 (M-1558), 10 février 1994 (1994-02-10) & JP 05 294292 A (MORIOKA KEIKI SEISAKUSHO:KK), 9 novembre 1993 (1993-11-09)

## Description

La présente invention concerne un dispositif d'émission d'images vidéo numériques.

Bien que non exclusivement, un tel dispositif comportant des moyens de prise de vues du type caméra vidéo est destiné plus particulièrement à être monté sur un aéronef, notamment un avion de transport civil, pour engendrer des images de l'environnement extérieur de l'aéronef et en particulier de l'environnement avant et/ou arrière de ce dernier, images qui sont transmises sur un écran visible par un pilote de l'aéronef.

Un tel dispositif permet, notamment, au pilote :
- d'avoir une vision en temps réel du positionnement de l'aéronef par rapport à son environnement au sol ; et
- de l'aider à guider l'aéronef, en particulier lorsque ce dernier roule sur une piste d'un aéroport avant le décollage ou après l'atterrissage,
ce qui permet, malgré la maniabilité réduite au sol de l'aéronef, d'éviter une sortie de la piste et notamment une sortie des roues arrière.

Il est préférable d'utiliser à cet effet des images numériques. En effet, on sait que les images numériques ne sont pas sensibles aux parasites, ce qui entraîne une qualité et une fiabilité accrues par rapport à des images analogiques usuelles. De plus, les images numériques peuvent être traitées directement de façon beaucoup plus simple que les images analogiques.

Toutefois, la génération d'images vidéo numériques présente un inconvénient important : le risque de gel d'image, c'est-à-dire le risque de présentation continue à l'écran de la même image et non d'images successives non identiques.

Ce gel d'image peut avoir pour origine un problème à l'une des différentes étapes (génération, mémorisation, affichage, ...) d'acquisition et de traitement des images et résulte généralement d'une mise à zéro défaillante d'une mémoire vidéo. Ce risque est accentué par la complexité de plus en plus importante des dispositifs d'émission d'images vidéo, qui peuvent notamment mettre en oeuvre des traitements variés et complexes, tels qu'une compression d'images ou une génération de "mosaïques" à partir de plusieurs sources vidéo.

Un gel d'image peut avoir des conséquences fâcheuses, notamment dans l'exemple précité, concernant le guidage d'un avion au sol, puisque, les images successives ne présentant généralement pas de différences significatives, le pilote fait difficilement la distinction entre une image sans mouvement et une image figée, ce qui peut l'amener à commettre des erreurs de guidage.

On connaît différentes solutions pour détecter un gel d'image.

Une première solution consiste à effacer à chaque fois les mémoires vidéo entre deux images successives. Cette solution nécessite toutefois des logiques d'effacement avec des références de temps précises pour que l'effacement puisse être réalisé au moment approprié. De plus, de telles logiques doivent être prévues pour chacune des différentes mémoires vidéo du dispositif d'émission d'images.

Une seconde solution consiste à comparer à chaque fois deux images successives. Cette solution nécessite toutefois de doubler les mémoires vidéo pour pouvoir conserver deux images successives et de prévoir de plus un comparateur et une logique de traitement associée. De plus, dans le cas où la scène filmée est réellement immobile, il est possible d'avoir deux images consécutives identiques, de sorte que cette seconde solution conduit alors à une détection erronée de gel d'image.

Par conséquent, aucune de ces solutions connues n'est satisfaisante, d'autant plus que dans le cas de l'application précitée au guidage d'un aéronef au sol, avec une restitution visuelle de l'avant et/ou de l'arrière de l'aéronef, ces solutions usuelles rendent le système embarqué plus compliqué et moins fiable.

Par ailleurs, le document WO-98/30978 divulgue un système d'analyse du mouvement d'un objet, comportant une caméra et des marqueurs. Chacun de ces marqueurs est agencé sur un organe mobile de l'objet et comporte :
- un capteur susceptible de détecter un signal lumineux émis par une source lumineuse équipant la caméra ;
- des moyens d'émission de signaux, tels que des diodes électroluminescentes ; et
- une unité de commande qui commande les moyens d'émission de sorte qu'ils engendrent un signal de réponse, lorsque ledit capteur détecte un signal lumineux. Chaque signal de réponse peut comporter l'une de deux valeurs : une valeur 1 (lorsqu'un signal est émis) ou une valeur 0 (lorsqu'aucun signal n'est émis).

De plus, l'unité de commande de chaque marqueur comporte un code d'identification particulier permettant d'identifier ce marqueur, qui est formé d'une suite de telles valeurs 0 et/ou 1, et elle commande lesdits moyens d'émission de sorte qu'ils émettent une suite de signaux de réponse restituant ce code d'identification. Par conséquent, il est possible d'identifier dans une image formée par la caméra chacun des différents marqueurs et ainsi de suivre le déplacement des organes mobiles respectifs, portant ces marqueurs.

En outre, le document US-4 483 599 concerne un dispositif destiné à fournir simultanément des signaux visuels et des signaux audio. Ce dispositif usuel comporte notamment des sources de lumière qui engendrent des signaux lumineux susceptibles d'être enregistrés.

Quant au document US-4 816 288, il divulgue un système de surveillance d'aéronef, qui comporte des moyens de prise de vues pour engendrer des images de parties extérieures de l'aéronef et un écran pour présenter ces images à l'équipage.

La présente invention a pour objet de remédier aux inconvénients précités. Elle concerne un dispositif d'émission d'images vidéo numériques permettant de détecter de façon simple et fiable tout gel d'image.

A cet effet, selon l'invention, ledit dispositif d'émission d'images vidéo numériques, comportant des moyens de prise de vues et des moyens d'utilisation des images formées par ces moyens de prise de vues est remarquable en ce qu'il comporte de plus des moyens pour former au moins un signal dans le champ de vision desdits moyens de prise de vues, de sorte que ledit signal apparaît sur au moins certaines des images engendrées par lesdits moyens de prise de vues, et en ce que ledit signal est formé de manière à varier temporellement pour permettre la détection d'un gel d'image sur lesdits moyens d'utilisation desdites images en cas d'absence de variation dudit signal.

Ainsi, grâce à l'invention, tant que le signal varie sur les images restituées, on sait que l'on est en présence d'un défilement normal d'images vidéo successives. En revanche, dès que ledit signal reste identique (et éventuellement absent) pendant une durée déterminée, on détecte l'existence d'une image figée.

Le dispositif conforme à l'invention permet ainsi de détecter visuellement, de façon simple et fiable, tout gel d'image.

En outre, de façon avantageuse :
- ledit signal est un signal intermittent, c'est-à-dire un signal qui disparaît et réapparaît par intervalles de temps réguliers ; et/ou
- ledit signal est formé de manière à apparaître à des endroits et/ou sous des formes variables sur des images successives engendrées par lesdits moyens de prise de vues.

De plus, avantageusement, ledit signal est formé de manière à apparaître à chaque fois, sur une zone de l'image, par exemple un coin de l'image, où il ne gêne pas la restitution visuelle de la scène représentée sur ladite image.

Lesdits moyens pour former au moins un signal peuvent être incorporés auxdits moyens de prise de vues. Dans ce cas, ils sont de préférence miniaturisés.

Cependant, de préférence, par sécurité, lesdits moyens pour former au moins un signal sont extérieurs auxdits moyens de prise de vues et indépendants de ces derniers. Ainsi, ils sont complètement découplés desdits moyens de prise de vues.

Dans un exemple de réalisation, lesdits moyens pour former au moins un signal peuvent alors comporter :
- un générateur d'impulsions lumineuses ; et
- une fibre optique reliée audit générateur d'impulsions lumineuses et agencée de manière à transmettre dans le champ de vision desdits moyens de prise de vues les impulsions lumineuses émises par ledit générateur d'impulsions lumineuses et représentant ledit signal.

Ils peuvent également, en variante, comporter :
- un élément susceptible d'être déplacé dans le champ de vision des moyens de prise de vues ; et
- un moyen de déplacement dudit élément, ledit élément étant déplacé de manière à apparaître de façon intermittente, et éventuellement à des endroits variables, sur des images successives engendrées par lesdits moyens de prise de vues et à représenter ledit signal.

Les figures du dessin annexé feront bien comprendre comment l'invention peut être réalisée. Sur ces figures, des références identiques désignent des éléments semblables.

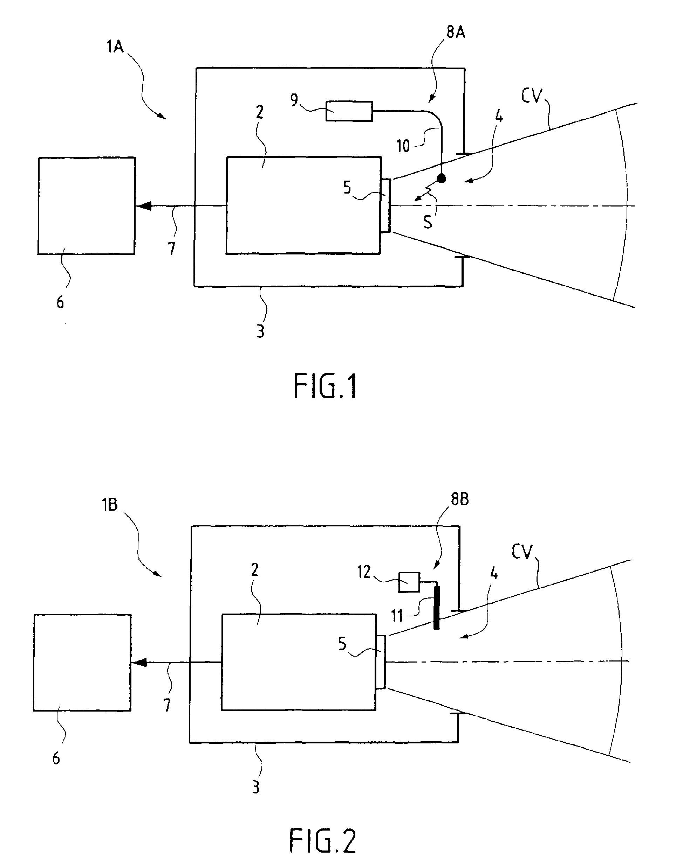

Les figures 1 et 2 montrent respectivement, de façon schématique, deux modes de réalisation différents d'un dispositif d'émission d'images vidéo numériques, conforme à l'invention.

Le dispositif conforme à l'invention et représenté selon deux modes de réalisation 1A et 1B différents, respectivement sur les figures 1 et 2, est susceptible d'émettre des images vidéo numériques.

De façon connue, ledit dispositif 1A ou 1B comporte :
- des moyens 2 de prise de vues, par exemple du type caméra vidéo numérique, agencés dans un boîtier 3 et susceptibles de prendre des vues d'un champ de vision CV, à travers une ouverture 4 prévue dans ledit boîtier 3. Lesdits moyens 2 comportent, à cet effet, de façon connue une surface de détection 5 munie, par exemple, d'une matrice de diodes photosensibles ou d'un détecteur matriciel à dispositif à transfert de charge ; et
- des moyens 6 d'utilisation des images formées par les moyens 2 et reçues par une liaison 7, par exemple électrique ou radioélectrique.

En ce qui concerne lesdits moyens 6, il peut s'agir d'un écran susceptible de présenter en temps réel à un opérateur la scène vue dans ledit champ de vision CV. Toutefois, lesdits moyens 6 peuvent également être des moyens d'enregistrement, tels qu'une mini régie vidéo par exemple, les images enregistrées par ces moyens pouvant être restituées de façon différée sur des moyens appropriés non représentés. Une telle solution présente l'avantage, dans le cas où l'on prévoit deux ensembles de moyens de prise de vues 2, de permettre d'afficher une mosaïque d'images constituée de vues prises par lesdits ensembles.

Dans une application préférée, les moyens 2 sont agencés de manière à prendre des vues de l'environnement à l'avant et/ou à l'arrière d'un aéronef et les moyens 6 représentent un écran monté dans le poste de pilotage de l'aéronef. Dans ce cas, ledit dispositif 1A, 1B permet d'ai der au guidage de l'aéronef, notamment un avion de transport civil, en particulier lors d'un déplacement au sol sur une piste d'un aéroport.

Selon l'invention, pour permettre une détection simple et fiable de tout gel d'image, ledit dispositif 1A, 1B comporte de plus des moyens 8A, 8B pour former au moins un signal S dans le champ de vision CV desdits moyens 2 de prise de vues, de sorte que ledit signal S apparaît sur au moins certaines des images engendrées par lesdits moyens 2 de prise de vues, ledit signal S étant formé de manière à varier temporellement.

Ainsi, si on voit en permanence le même signal sur l'écran 6, on sait que l'image est figée, ce qui permet de détecter facilement et de façon fiable tout gel d'image. Bien entendu, tant que le signal S varie, il n'existe aucun gel d'image.

Dans le mode de réalisation 1A représenté sur la figure 1, les moyens 8A comportent :
- un générateur 9 d'impulsions lumineuses, par exemple une diode électroluminescente ; et
- une fibre optique 10 reliée audit générateur 9 d'impulsions lumineuses et agencée de manière à transmettre dans le champ de vision CV desdits moyens 2 de prise de vues les impulsions lumineuses, par exemple des impulsions laser, émises par ledit générateur 9 d'impulsions lumineuses et représentant ledit signal S.

Les durées d'émission des impulsions et les durées entre deux impulsions successives peuvent être réglées de manière à permettre une détection visuelle, la plus facile et fiable possible.

A cet effet, les impulsions lumineuses peuvent bien entendu être engendrées selon une fréquence déterminée fixe.

Par ailleurs, dans le mode de réalisation 1B représenté sur la figure 2, les moyens 8B comportent :
- un élément 11, par exemple une barrette, susceptible d'être déplacé, par exemple de façon rotative ou oscillatoire, dans le champ de vision CV des moyens 2 ; et
- un moyen 12, par exemple un moteur électrique, pour déplacer ledit élément 11.

L'élément 11 est déplacé de manière à apparaître de façon intermittente (et le cas échéant éventuellement à des endroits variables) dans ledit champ de vision CV et donc aussi sur les images formées par les moyens 2.

Ainsi, un gel d'image est détecté lorsque, pendant une durée déterminée, par exemple quelques secondes, l'élément 11 apparaît en permanence (au même endroit) sur la restitution d'images, réalisée par l'écran 6, ou n'y apparaît plus du tout. Bien entendu, la vitesse et l'amplitude de déplacement sont réglables et sont réglées de manière à permettre une détection visuelle efficace.

Dans un mode de mise en oeuvre particulier du dispositif 1B, on peut prévoir que l'élément 11 est déplacé de manière à toujours se trouver dans le champ de vision CV et donc à ne jamais disparaître des images successives formées, mais simplement à se déplacer sur ces dernières, de sorte qu'un gel d'image se traduit par une immobilisation dudit élément 11.

En outre, dans un autre mode de réalisation non représenté, on peut prévoir, non pas un élément qui se déplace comme l'élément 1 1 représenté sur la figure 2, mais un élément qui se déforme temporellement, c'est-à-dire dont la forme et/ou la taille varient de sorte qu'un gel d'image est détecté lors d'une absence de déformation pendant une durée déterminée.

Par ailleurs, selon l'invention, la fibre optique 10 et l'élément 11 sont agencés de sorte que, à chaque fois, le signal engendré sur une image se trouve à un endroit de l'image, par exemple dans un coin, où il gêne le moins possible la restitution visuelle de l'environnement filmé par les moyens 2.

Pour la sûreté du dispositif conforme à la présente invention, il est particulièrement avantageux --comme cela est représenté sur les figures 1 et 2-- que les moyens 8A et 8B soient extérieurs aux moyens de prise de vues 2 et indépendants de ceux-ci. Il ne peut donc alors y avoir d'interférence entre lesdits moyens 8A et 8B et l'électronique des caméras, des écrans ou de la régie. De plus, lesdits moyens 8A et 8B peuvent comporter un dispositif d'aide à la focalisation des images, afin d'améliorer la qualité et la netteté de celle-ci.

Toutefois, il est bien évident que lesdits moyens 8A et 8B peuvent être intégrés auxdits moyens de prise de vues 2, par exemple à des fins de compacité du dispositif de l'invention. Ils sont alors de préférence miniaturisés pour permettre un gain de poids et d'encombrement.

Les moyens 8A et 8B peuvent de plus porter des informations utiles, telles que l'heure par exemple.

## Revendications

1. Dispositif d'émission d'images vidéo numériques, comportant des moyens (2) de prise de vues et des moyens (6) d'utilisation des images formées par ces moyens (2) de prise de vues,
**caractérisé en ce qu'**il comporte de plus des moyens (8A, 8B) pour former au moins un signal (S) dans le champ de vision (CV) desdits moyens (2) de prise de vues, de sorte que ledit signal (S) apparaît sur au moins certaines des images engendrées par lesdits moyens (2) de prise de vues, et **en ce que** ledit signal (S) est formé de manière à varier temporellement dans ledit champ de vision (CV) pour permettre la détection d'un gel d'image sur lesdits moyens (6) d'utilisation desdites images en cas d'absence de variation dudit signal (S).

2. Dispositif selon la revendication 1,
**caractérisé en ce que** ledit signal (S) est un signal intermittent.

3. Dispositif selon l'une des revendications 1 et 2,
**caractérisé en ce que** ledit signal est formé de manière à apparaître à des endroits variables sur des images successives engendrées par lesdits moyens (2) de prise de vues.

4. Dispositif selon l'une des revendications 1 à 3,
**caractérisé en ce que** ledit signal est formé de manière à apparaître sous des formes variables sur des images successives engendrées par lesdits moyens (2) de prise de vues.

5. Dispositif selon l'une quelconque des revendications 1 à 4,
**caractérisé en ce que** ledit signal (S) est formé de manière à apparaître, à chaque fois, sur une zone de l'image où il ne gêne pas la restitution visuelle de la scène représentée sur ladite image.

6. Dispositif selon la revendication 5,
**caractérisé en ce que** ladite zone correspond à un coin de l'image.

7. Dispositif selon l'une quelconque des revendications 1 à 6,
**caractérisé en ce que** lesdits moyens (8A, 8B) sont extérieurs auxdits moyens de prise de vues (2) et indépendants de ceux-ci.

8. Dispositif selon la revendication 7,
**caractérisé en ce que** lesdits moyens (8A) pour former au moins un signal (S) comportent :
- un générateur (9) d'impulsions lumineuses ; et
- une fibre optique (10) reliée audit générateur (9) d'impulsions lumineuses et agencée de manière à transmettre dans le champ de vision (CV) desdits moyens (2) de prise de vues les impulsions lumineuses émises par ledit générateur (9) d'impulsions lumineuses et représentant ledit signal (S).

9. Dispositif selon la revendication 7,
**caractérisé en ce que** lesdits moyens (8B) pour former au moins un signal comportent :
- un élément (11) susceptible d'être déplacé dans le champ de vision (CV) des moyens (2) de prise de vues ; et
- un moyen (12) de déplacement dudit élément (11), ledit élément (11) étant déplacé de manière à apparaître de façon intermittente sur des images successives engendrées par lesdits moyens (2) de prise de vues et à représenter ledit signal.

10. Dispositif selon la revendication 9,
**caractérisé en ce que** ledit élément (11) est déplacé de manière à apparaître à des endroits variables sur des images successives.

11. Dispositif selon l'une quelconque des revendications précédentes, appliqué à un aéronef,
**caractérisé en ce que** lesdits moyens (2) de prise de vues sont agencés de manière à prendre des vues de l'environnement de l'aéronef, et ledit dispositif (1A,1B) comporte de plus un écran qui est monté dans le poste de pilotage de l'aéronef et qui est susceptible de présenter en temps réel à un opérateur la scène vue dans le champ de vision (CV) desdits moyens (2) de prise de vues.

## Claims

1. A device for emitting digital video images, comprising picture-taking means (2) and means (6) for using the images formed by these picture-taking means (2),
**characterized in that** it furthermore comprises means (8A, 8B) for forming at least one signal (S) in the field of vision (CV) of said picture-taking means (2), so that said signal (S) appears in at least some of the images produced by said picture-taking means (2), and **in that** said signal (S) is formed in such a way as to vary temporally in said field of vision (CV)for allowing the detection of an image freeze on said means (6) using said images when the signal (S) is not varying.

2. The device as claimed in claim 1,
**characterized in that** said signal (S) is an intermittent signal.

3. The device as claimed in any one of claims 1 and 2,
**characterized in that** said signal is formed in such a way as to appear at variable locations in successive images produced by said picture-taking means (2).

4. The device as claimed in any one of claims 1 to 3,
**characterized in that** said signal is formed in such away as to appear in variable shapes in successive images produced by said picture-taking means (2).

5. The device as claimed in any one of claims 1 to 4,
**characterized in that** said signal (S) is formed in such a way as to appear, on each occasion, in a zone of the image where it does not impede the visual restoration of the scene represented in said image.

6. The device as claimed in claim 5,
**characterized in that** said zone corresponds to a corner of the image.

7. The device as claimed in any one of claims 1 to 6,
**characterized in that** said means (8A, 8B) are exterior to said picture-taking means (2) and independent of the latter.

8. The device as claimed in claim 7,
**characterized in that** said means (8A) for forming at least one signal (S) comprise:
- a generator (9) of light pulses; and
- an optical fiber (10) linked to said generator (9) of light pulses and arranged in such a way as to transmit in the field of vision (CV) of said picture-taking means (2) the light pulses emitted by said generator (9) of light pulses and representing said signal (S).

9. The device as claimed in claim 7,
**characterized in that** said means (8B) for forming at least one signal comprise:
- an element (11) able to be moved in the field of vision (CV) of the picture-taking means (2); and
- a means (12) of moving said element (11), said element (11) being moved in such a way as to appear intermittently in successive images produced by said picture-taking means (2) and to represent said signal.

10. The device as claimed in claim 9,
**characterized in that** said element (11) is moved in such a way as to appear at variable locations in successive images.

11. The device as claimed in any one of the preceding claims, applied to an aircraft,
**characterized in that** said picture-taking means (2) are arranged in such a way as to take pictures of the environment of the aircraft, and said device (1A, 1B) comprises moreover a screen which is mounted in the aircraft's control station and which is able to present to an operator in real time the scene viewed in the field of vision (CV) of said picture-taking means (2) .

## Patentansprüche

1. Vorrichtung zur Übertragung von digitalen Videobildern mit einer Aufnahmeeinrichtung (2) und mit einer Anwendungseinrichtung (6) für durch diese Aufnahmeeinrichtung (2) erzeugten Bilder,
**dadurch gekennzeichnet, dass** diese ferner Mittel (8A, 8B) umfasst, um wenigstens ein Signal (S) in dem Sichtfeld (CV) der Aufnahmeeinrichtung (2) zu bilden, derart, dass das Signal (S) auf wenigstens einigen der durch die Aufnahmeeinrichtung (2) erzeugten Bildern erscheint, und dass das Signal (S) so gebildet wird, dass sich dieses in dem Sichtfeld (CV) temporär verändert, um die Erkennung eines Standbildes auf der Anwendungseinrichtung (6) der Bilder im Falle des Nichtvorliegens einer Veränderung des Signals (S) zu ermöglichen.

2. Vorrichtung nach Anspruch 1,
**dadurch gekennzeichnet, dass** das Signal (S) ein intermittierendes Signal ist.

3. Vorrichtung nach einem der Ansprüche 1 und 2,
**dadurch gekennzeichnet, dass** das Signal so gebildet wird, dass dieses an verschiedenen Seiten auf den durch die Aufnahmeeinrichtung (2) erzeugten aufeinander folgenden Bildern erscheint.

4. Vorrichtung nach einem der Ansprüche 1 bis 3,
**dadurch gekennzeichnet,**
**dass** das Signal so gebildet wird, dass dieses in verschiedenen Formen auf den durch die Aufnahmeeinrichtung (2) erzeugten aufeinander folgenden Bildern erscheint.

5. Vorrichtung nach einem der Ansprüche 1 bis 4,
**dadurch gekennzeichnet, dass** das Signal (S) so gebildet wird, dass dieses jedes Mal auf einem Bildbereich erscheint, wo es die optische Rekonstruktion der auf dem Bild wiedergegebenen Szenerie nicht behindert.

6. Vorrichtung nach Anspruch 5;
**dadurch gekennzeichnet, dass** der Bereich einer Bildecke entspricht.

7. Vorrichtung nach einem der Ansprüche 1 bis 6,
**dadurch gekennzeichnet, dass** die Mittel (8A, 8B) außerhalb der Aufnahmeeinrichtung (2) liegen und unabhängig von dieser sind.

8. Vorrichtung nach Anspruch 7,
**dadurch gekennzeichnet, dass** die Mittel (8A) zum Erzeugen wenigstens eines Signals (S) umfassen:
- einen Generator (9) für Lichtimpulse; und
- eine Lichtleitfaser (10), die mit dem Generator (9) für Lichtimpulse verbunden ist und so angeordnet ist, dass sie in das Sichtfeld (CV) der Aufnahmeeinrichtung (2) Lichtimpulse überträgt, die von dem Generator (9) für Lichtimpulse gesendet werden und das Signal (S) darstellen.

9. Vorrichtung nach Anspruch 7,
**dadurch gekennzeichnet, dass** die Mittel (8B) zum Erzeugen wenigstens eines Signals umfassen:
- ein Element (11), das in das Sichtfeld (CV) der Aufnahmeeinrichtung (2) verschoben werden kann; und
- ein Mittel (12) zur Verschiebung des Elements (11), wobei das Element (11) so verschoben wird, dass dieses intermittierend auf den durch die Aufnahmeeinrichtung (2) erzeugten, aufeinander folgenden Bildern erscheint und das Signal repräsentiert.

10. Vorrichtung nach Anspruch 9,
**dadurch gekennzeichnet, dass** das Element (11) so verschoben wird, dass dieses an verschiedenen Rändern auf den aufeinander folgenden Bildern erscheint.

11. Vorrichtung nach einem der vorstehenden Ansprüche, angewendet an einem Flugzeug,
**dadurch gekennzeichnet, dass** die Aufnahmeeinrichtung (2) so angeordnet ist, dass sie Umgebungsansichten des Flugzeugs aufnimmt und die Vorrichtung (1A, 1B) ferner einen Bildschirm umfasst, der in dem Cockpit des Flugzeugs angebracht ist und der in Echtzeit einem Benutzer die in dem Sichtfeld (CV) der Aufnahmeeinrichtung (2) gesehenen Szenerie wiedergeben kann.
